# EUROPEAN PATENT SPECIFICATION

(11) **EP 2 863 458 B1**
(45) Date of publication and mention of the grant of the patent: **17.05.2017**
(21) Application number: 14150875.4
(22) Date of filing: 13.01.2014
(51) Int. Cl.: H01M 4/88, H01M 8/0234, D21H 13/50, H01M 8/0241, H01M 4/86, H01M 8/1018

(54) **Method for producing carbon paper for fuel cell gas diffusion layer by addition of conducting polymer and carbon paper for fuel cell gas diffusion layer produced by the method**
Verfahren zur Herstellung von Kohlepapier für Brennstoffzellen-Gasdiffusionsschicht durch Zugabe von leitenden Polymeren und Kohlepapier für nach diesem Verfahren hergestellte Brennstoffzellen-Gasdiffusionsschicht
Procédé de production de papier carbone de la couche de diffusion de gaz de pile à combustible par addition d'un polymère conducteur et un tel papier produit par ledit procédé

(30) Priority: 15.10.2013 KR 20130122791
(43) Date of publication of application: 22.04.2015
(73) Proprietor: Korea Institute of Energy Research, Daejeon 305-343 (KR)
(72) Inventor: Kim, Hyunuk, Seo-gu, Daejeon (KR); Yoo, Yoonjong, Dunsan-ro, Seo-gu, Daejeon (KR); Lee, Sungjin, Yuseong-gu, Daejeon (KR); Lee, Young Ju, Changwon-si, Gyeongsangnam-do (KR); Song, Kwangsub, Yuseong-gu, Daejon (KR)
(74) Representative: V.O.

(56) References cited:
- KR-A- 20090 080 160
- US-A1- 2002 175 073
- US-A1- 2008 193 827
- US-A1- 2013 244 133
- XINGBIN YAN ET AL: "Fabrication of carbon nanofiber-polyaniline composite flexible paper for supercapacitor", NANOSCALE, vol. 3, no. 1, 1 January 2011 (2011-01-01) , page 212, XP055117301, ISSN: 2040-3364, DOI: 10.1039/c0nr00470g
- SUNGRYUL YUN ET AL: "Multiwalled-carbon nanotubes and polyaniline coating on electro-active paper for bending actuator; Multiwalled-carbon nanotubes and polyaniline coating", JOURNAL OF PHYSICS D: APPLIED PHYSICS, INSTITUTE OF PHYSICS PUBLISHING LTD, GB, vol. 39, no. 12, 21 June 2006 (2006-06-21) , pages 2580-2586, XP020094534, ISSN: 0022-3727, DOI: 10.1088/0022-3727/39/12/016

## Description

### BACKGROUND OF THE INVENTION

### 1. Field of the Invention

The present invention relates to a carbon paper for a fuel cell gas diffusion layer and a method for producing the same.

### 2. Description of the Related Art

Fuel cells are systems in which hydrogen contained in hydrocarbons, such as methanol, ethanol and natural gas, reacts with oxygen to create chemical energy, which is directly converted into electrical energy.

Representative examples of fuel cell systems include polymer electrolyte fuel cells and direct oxidation fuel cells. Polymer electrolyte fuel cells are considered clean energy sources capable of replacing fossil fuels. Polymer electrolyte fuel cells have high output density and high energy conversion efficiency, are operable at room temperature, and can be miniaturized and sealed. Due to these advantages, polymer electrolyte fuel cells can be used in a wide range of applications, including pollution-free vehicles, home electricity generation systems, portable power sources for mobile communication equipment, and military equipment.

Fuel cells are devices in which a fuel as a reducing agent and oxygen or air as an oxidizing agent are supplied continuously from the outside, the fuel is allowed to electrochemically react with the gas, and electrical energy is extracted from the reaction. Such fuel cells are often classified based on their operational temperatures, kinds of fuels used, applications, and so forth. At present, fuel cells are broadly classified into five major types, i.e. solid oxide fuel cells (SOFCs), molten carbonate fuel cells (MCFCs), phosphoric acid fuel cells (PAFCs), polymer electrolyte fuel cells (PEFCs), and alkaline fuel cells (AFCs) according to the kind of electrolyte they employ.

These fuel cells use hydrogen fuel produced from methane, etc. In contrast, recently known direct methanol fuel cells (DMFCs) directly use aqueous methanol solutions as fuels.

Attention has been directed to solid polymer fuel cells (hereinafter also referred to as 'polymer electrolyte fuel cells (PEFCs)'). Such a polymer electrolyte fuel cell has a construction in which a solid polymer membrane is interposed between two kinds of electrodes and this electrode structure is sandwiched between separators.

Specifically, the PEFC has a structure in which electrodes such as a cathode (an oxygen electrode) and an anode (a hydrogen electrode) are arranged at both sides of a solid polymer membrane to construct a unit cell and separators are disposed at both sides of the unit cell. In the PEFC, the electrodes should be separated from each other to prevent the fuel (hydrogen) from directly reacting with the oxidizing agent (air), and it is necessary to transport hydrogen ions (protons) created in the anode to the cathode.

PEFCs were first developed by General Electric (GE, USA) in the late 1950s. In the 1960s, PEFCs were mounted in the Gemini spacecraft. Hydrocarbon ion exchange membranes were used in the initial stages of development. Thereafter, DuPont (USA) succeeded in developing Nafion, a fluorine resin ion-exchange membrane, to markedly improve the durability of PEFCs. Nafion was initially developed for airspace and military applications. In the 1980s, Ballard Power Systems Inc. (Canada) began to develop PEFCs for civilian applications. In the 1990s, Daimler-Benz AG succeeded in running fuel cell vehicles mounted with Ballard's PEFCs. Due to this success, PEFCs have become the focus of world interest.

The electricity generation of PEFCs is generally based on the following principle. An anode and a cathode interpose a fluorine resin ion-exchange membrane as an electrolyte membrane therebetween. Each of the electrodes consists of a catalyst layer and a gas diffusion layer, and the fluorine resin ion-exchange membrane can conduct protons. When a fuel including hydrogen is introduced into the anode and an oxidizing agent including oxygen is introduced into the cathode, a catalytic reaction occurs to generate electricity.

The gas diffusion layer of the PEFC utilizes a highly gas permeable, electrically conductive carbon paper having a thickness of about 100 to about 300 µm.

According to a conventional method for producing a carbon paper by wet-laid processing, a carbon fiber is dispersed in an aqueous solution, the dispersion is subjected to dehydration and sheet forming, followed by drying to prepare a carbon fiber web, the carbon fiber web is impregnated with a heat curable resin and cured under heat and pressure to form a carbon sheet, and the heat curable resin of the sheet is degreased and carbonized at a high temperature to yield the final carbon paper.

However, the heat treatment of the carbon fiber web impregnated with the heat curable resin by carbonization at a temperature of 1,000 °C or higher increases the production cost of the carbon paper.

Korean Patent Publication No. 10-2011-0078903 is associated with the present invention. Specifically, this patent publication discloses a micro-perforated carbon paper for a diffusion layer.

KR 2009 0080160 A is directed to manufacturing a gas diffusion layer comprising the steps of coating a conductive macromolecule solution on one side of a porous carbon basic material and carbonizing the basic material. The solution may comprise a variety of conducting polymers including for example polypyrrole.

Xingbin Yan (Nanoscale, 2011, 3, 212) is directed to an electrospun carbon nanofiber paper substrate comprising polyaniline nanoparticles.

US 2013/244133 is directed to an electrode for a fuel cell, which comprises a layer of a conducting adhesive. The conducting adhesive may comprise a polymer, for example polyaniline or PEDOT:PSS.

### SUMMARY OF THE INVENTION

The present invention has been made in view of the above problems, and it is an object of the present invention to provide a carbon paper for a fuel cell gas diffusion layer that can be produced at low cost, and a method for producing the carbon paper. It is a more specific object of the present invention to provide a high-quality carbon paper for a fuel cell gas diffusion layer that can be produced even at a low baking and calcination temperature, and a method for producing the carbon paper.

According to one aspect of the present invention, there is provided a carbon paper for a fuel cell gas diffusion layer including 10 to 70% by weight of a mixture of 1) polypyrrole or a derivative thereof and 2) poly(3,4-ethylenedioxythiophene):poly(styrenesulfonate) (PEDOT:PSS) or a derivative thereof wherein the carbon paper is produced by baking and calcination at a temperature of 50 to 500 °C.

According to another aspect of the present invention, there is provided a method for producing a carbon paper for a fuel cell gas diffusion layer, the method including: 1) mixing conductive polymers polypyrrole or a derivative thereof and poly(3,4-ethylenedioxythiophene):poly(styrenesulfonate) (PEDOT:PSS) or a derivative thereof with water or an organic solvent; 2) applying the mixed solution to a carbon fiber web; and 3) baking and calcining the applied carbon fiber web at a temperature of 50 to 500 °C, wherein the carbon paper includes 10 to 70% by weight of the conducting polymer.

The carbon paper of the present invention can be produced by baking and calcination at a low temperature. This low-temperature heat treatment can greatly reduce the production cost of the carbon paper. In addition, the carbon paper has superior gas permeability and electrical conductivity despite the greatly reduced production cost. The application of the carbon paper to a gas diffusion layer of a fuel cell contributes to reduced fabrication cost and improved quality of the fuel cell.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a SEM image showing the surface of a carbon paper produced in Example 1;
FIG. 2 is a SEM image showing the surface of a carbon paper produced in Example 2;
FIG. 3 is a SEM image showing the surface of a carbon paper produced in Example 3;
FIG. 4 is a graph showing changes in the resistance of carbon papers produced in Examples 1- 3;
FIG. 5 is a graph showing changes in the weight of carbon papers produced in Examples 1-3 with increasing baking and calcination temperature; and
FIG. 6 graphically shows changes in the resistance of carbon papers produced in Examples 1-3 and Comparative Example 2 with increasing baking and calcination temperature.

### DETAILED DESCRIPTION OF THE INVENTION

Thus, the present inventors have earnestly and intensively conducted research to develop a highly gas permeable, electrically conductive carbon paper at low cost. As a result, the present inventors have found a carbon paper for a fuel cell gas diffusion layer and a method for producing the carbon paper according to the present invention, which will be described below.

Specifically, the present invention provides a carbon paper for a fuel cell gas diffusion layer including 10 to 70% by weight of a mixture of 1) polypyrrole or a derivative thereof and 2) poly(3,4-ethylenedioxythiophene):poly(styrenesulfonate) (PEDOT:PSS) or a derivative thereof wherein the carbon paper is produced by baking and calcination at a temperature of 50 to 500 °C.

The presence of the conducting polymer enables the production of the carbon paper by baking and calcination at a low temperature and at the same time ensures superior gas permeability and electrical conductivity of the carbon paper.

The conducting polymer may have a molecular weight of 1,000 to 100,000 Da.

The baking and calcination temperature is from 50 to 500 °C, more preferably from 300 to 500 °C. A baking and calcination temperature lower than 50 °C makes it difficult to achieve sufficient gas permeability and electrical conductivity, which are to be achieved by the present invention. Meanwhile, a baking and calcination temperature exceeding 500 °C leads to an increase in the production cost of the carbon paper, which is economically undesirable.

Due to the presence of the conducting polymer, the carbon paper of the present invention can achieve superior gas permeability and electrical conductivity despite the low baking and calcination temperature. The content of the conducting polymer in the carbon paper is from 10 to 70% by weight, more preferably 40 to 70% by weight. The presence of the conducting polymer in an amount of less than 10% by weight makes it difficult to achieve sufficient gas permeability and electrical conductivity, which are to be achieved by the present invention. Meanwhile, the presence of the conducting polymer in an amount exceeding 70% by weight is uneconomical because the amount of the conducting polymer is larger than is necessary to achieve sufficient gas permeability and electrical conductivity, which are to be achieved by the present invention.

In another aspect, the present invention provides a method for producing a carbon paper for a fuel cell gas diffusion layer. Specifically, the method includes: 1) mixing conducting polymers polypyrrole or a derivative thereof and poly(3,4-ethylenedioxy-thiophene):poly(styrenesulfonate) (PEDOT:PSS) or a derivative thereof, with water or an organic solvent; 2) applying the mixed solution to a carbon fiber web; and 3) baking and calcining the applied carbon fiber web at a temperature of 50 to 500 °C, wherein the carbon paper includes 10 to 70% by weight of the conducting polymer.

The use of the conducting polymer is preferred because sufficient gas permeability and electrical conductivity of the carbon paper can be achieved even at a low calcining temperature.

The conducting polymer may have a molecular weight of 1,000 to 100,000 Da.

In step 1), the conducting polymer is mixed with water or an organic solvent to prepare a mixed solution. Preferably, 10 to 50 parts by weight of the conducting polymer is mixed with 100 parts by weight of the water or organic solvent. If the conducting polymer is mixed in an amount of less than 10 parts by weight, sufficient gas permeability and electrical conductivity of the final carbon paper may not be achieved. Meanwhile, an amount of the conducting polymer exceeding 50 parts by weight is larger than is necessary, which is economically undesirable.

The organic solvent may be one that has one or more -OH groups. The organic solvent is preferably selected from the group consisting of ethylene glycol, glycerol, methanol, ethanol, isopropyl alcohol, butanol, propanol, and mixtures thereof.

Any carbon fiber web for use in a fuel cell gas diffusion layer may be used without particular limitation in step 2). Preferably, the carbon fiber web is prepared by dispersing a carbon fiber in an aqueous solution, subjecting the dispersion to dehydration and sheet forming in a wet paper forming machine, followed by drying.

There is no particular restriction on the method for applying the mixed solution to the carbon fiber web in step 2). Preferably, the mixed solution is applied using a brush or roller. Alternatively, the carbon fiber web may be impregnated with the mixed solution.

In step 3), the applied carbon fiber web is baked and calcined. The baking and calcination temperature is preferably from 50 to 500 °C, more preferably from 300 to 500 °C.

The baking and calcination time is preferably in the range of 1 to 12 hours. Within this range, sufficient gas permeability and electrical conductivity can be imparted to the carbon paper. If the baking and calcination time is shorter than 1 hour, it may be difficult to impart sufficient gas permeability and electrical conductivity to the carbon paper. Meanwhile, if the baking and calcination time exceeds 12 hours, there is the danger that the state of the final carbon paper may be deformed.

The carbon paper produced by the method of the present invention preferably includes 10 to 70% by weight, more preferably 40 to 70% by weight of the conducting polymer. The presence of the conducting polymer in an amount of less than 10% by weight makes it impossible to achieve sufficient gas permeability and electrical conductivity. Meanwhile, an amount of the conducting polymer exceeding 70% by weight is larger than is necessary, which is economically undesirable.

The carbon paper produced by the method of the present invention has superior gas permeability and electrical conductivity despite the low baking and calcination temperature when compared to conventional carbon papers having undergone baking and calcination at around 1,000 °C. Therefore, the method of the present invention is effective in greatly reducing the production cost of the carbon paper when compared to conventional methods for producing carbon papers.

The present invention will be explained in detail in such a manner that those with ordinary knowledge in the art can easily carry out the invention with reference to the following examples. However, the present invention is not limited to the illustrated embodiments and may be embodied in various different forms.

### EXAMPLES

### Example 1

In this example, polypyrrole and poly(3,4-ethylenedioxy-thiophene):poly(styrenesulfonate) (PEDOT:PSS) were used as conducting polymers. The polypyrrole was dispersed in ethylene glycol to prepare a polypyrrole solution (40 wt%) with a viscosity of 7,500 ± 1,000 cps. The PEDOT:PSS was dispersed in an aqueous solution to prepare a PEDOT:PSS solution with a viscosity of 44 mPa·S. The polypyrrole solution and the PEDOT:PSS solution were mixed in a weight ratio of 50:50. Thereafter, the mixed solution was uniformly applied to a carbon fiber web using a brush. The carbon fiber web was homemade in accordance with Korean Patent Application No. 10-2012-0080526. The applied carbon fiber web was baked in a home-built carbonization furnace at a high temperature. The baking was performed at different temperatures of 100 °C, 200 °C, 300 °C, and 400 °C (each for 2 h) to produce a carbon paper for a fuel cell gas diffusion layer.

### Example 2 (not part of the invention)

A carbon paper for a fuel cell gas diffusion layer was produced in the same manner as in Example 1, except that polypyrrole was used alone as a conducting polymer.

### Example 3 (not part of the invention)

A carbon paper for a fuel cell gas diffusion layer was produced in the same manner as in Example 1, except that PEDOT:PSS was used alone as a conducting polymer.

### Comparative Example 1

A carbon paper for a fuel cell gas diffusion layer was produced in the same manner as in Example 1, except that a solution of a heat curable resin was impregnated into the carbon fiber web instead of applying the conducting polymers to the carbon fiber web, and the calcining temperature was changed to 1,000 °C.

### Comparative Example 2

A carbon paper for a fuel cell gas diffusion layer was produced in the same manner as in Example 1, except that a solution of a phenolic resin was impregnated into the carbon fiber web instead of applying the conducting polymers to the carbon fiber web, and the calcining temperature was changed to 1,000 °C.

### Experimental Examples

### <Experimental Example 1: SEM measurement of the carbon papers>

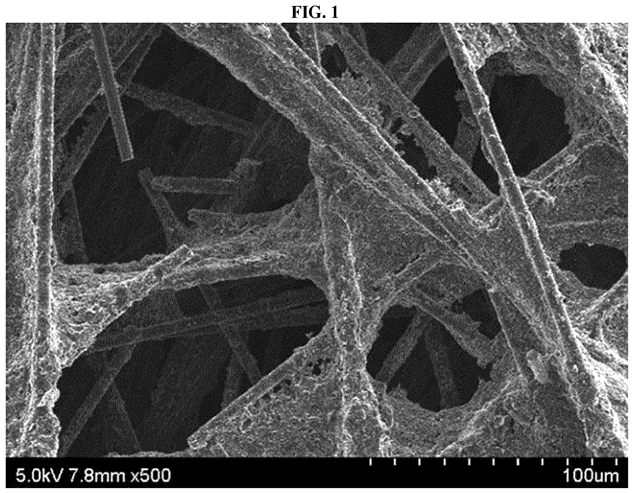

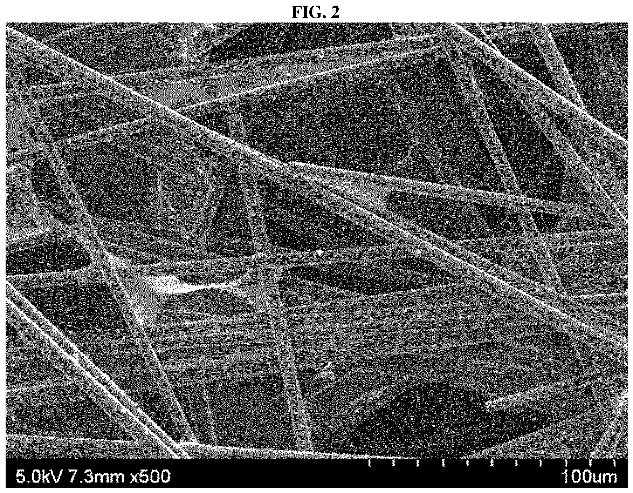

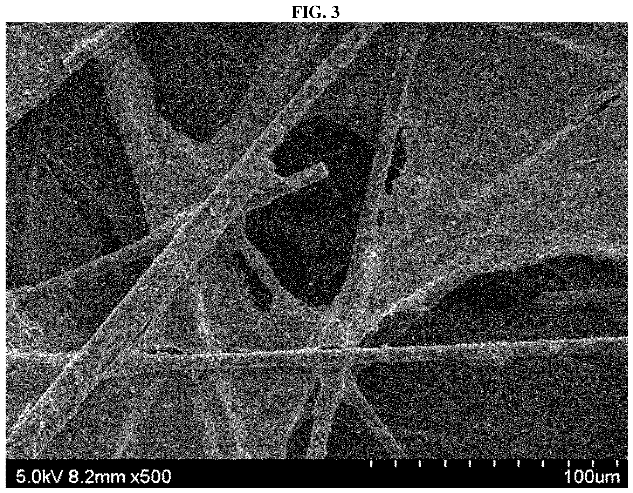

The surfaces of the carbon papers produced by baking and calcination at a temperature of 100 °C in Examples 1, 2 and 3 were observed by SEM, and the results are shown in FIGS. 1, 2, and 3, respectively.

### <Experimental Example 2: Measurement and evaluation of resistances of the carbon papers when pressurized by electrodes>

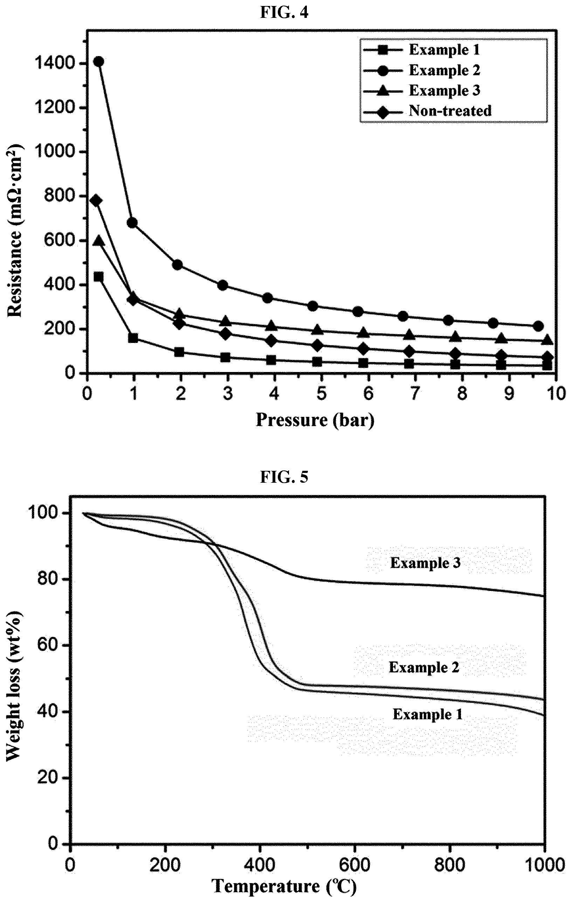

Changes in the resistance of the carbon papers produced in Examples 1-3 and Comparative Example 1 were measured when the carbon papers were pressurized by electrodes. First, each carbon paper having an area of 4.799 cm² was shaped into a doughnut. When the carbon paper was pressurized by an electrode, both sides of which were coated with gold, the resistance of the carbon paper was measured using an analyzer (CPRT 10 L, LivingCare) for the characterization of gas permeable layers. The results are shown in FIG. 4.

As can be seen from FIG. 4, the carbon paper of Example 1 had lower resistance values than that of Comparative Example 1, and the carbon papers of Examples 2 and 3 showed no significant differences in resistance compared to the carbon paper of Comparative Example 1. These results demonstrate that the carbon paper of Example 1 had superior electrical conductivity and the carbon papers of Examples 2 and 3 had similar electrical conductivity to the carbon paper of Comparative Example 1.

### <Experimental Example 3: Measurement of gas permeability>

The amount of gas flowing through each of the carbon papers (size = 10 mm x 10 mm) produced in Examples 1-3 and Comparative Examples 1-2 was measured using a gas permeability tester (A20, Borgwaldt KC) to determine the gas permeability of the carbon paper. The results are shown in Table 1.

**TABLE 1**

| | Average flow rate (ml/min/cm²) |
|---|---|
| Polypyrrole and PEDOT:PSS (Example 1, 1:1) | 610 |
| Polypyrrole and PEDOT:PSS (Example 1, 2:1) | 1197 |
| Polypyrrole and PEDOT:PSS (Example 1, 1:2) | 341 |
| Polypyrrole (Example 2) | 8616 |
| PEDOT:PSS (Example 3) | 6396 |

The results in Table 1 on the carbon papers of Examples 1-3 showed flow rates of 341-8616 ml/min/cm², demonstrating high gas permeability of the carbon papers.

### <Experimental Example 4: Measurement of baking and calcination results depending on temperature>

In this example, appropriate baking and calcination temperatures of the carbon papers of Examples 1-3 and Comparative Example 2 were determined. The results are shown in FIG. 5.

As is evident from FIG. 5, baking and calcination were completed at around 500 °C for the carbon paper of Example 1, and thereafter there was no substantial change in the weight of the carbon paper.

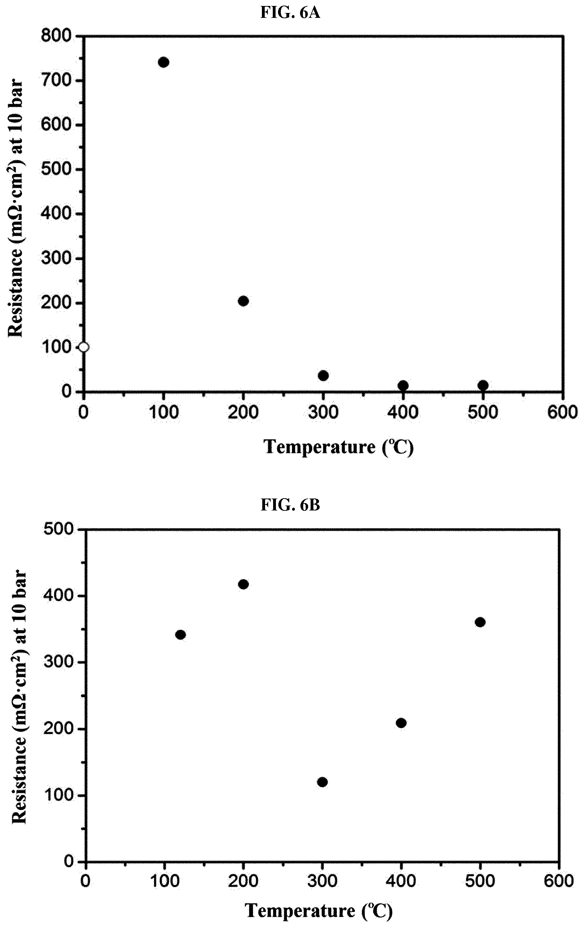

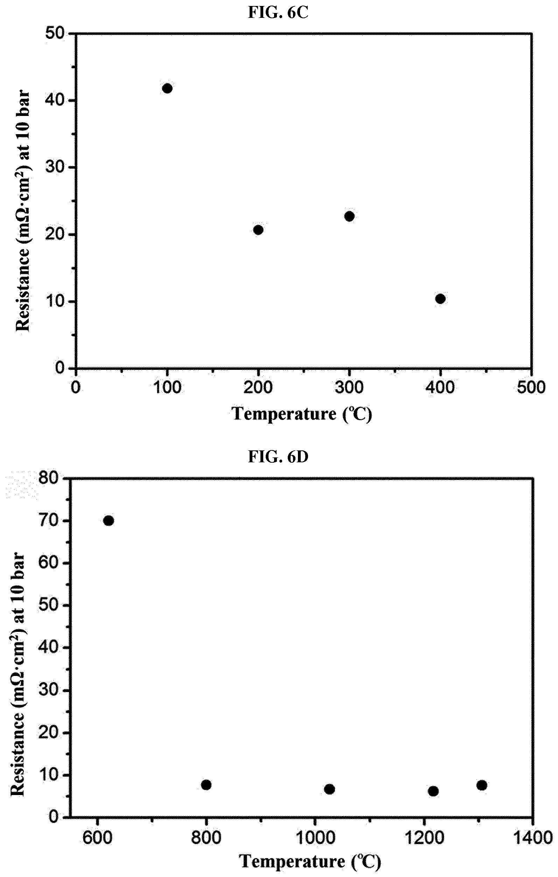

FIG. 6 graphically shows changes in the resistance of the carbon papers of Example 1 (6a), Example 2 (6b), Example 3 (6c), and Comparative Example 2 (6d) with increasing baking and calcination temperature. The resistance of the carbon paper of Example 1 reached a minimum at around 400 °C. In contrast, the resistance of the carbon paper produced using the phenolic resin in Comparative Example 2 (6d) was lowered at a temperature of 800 °C or higher.

These experimental results demonstrate superior gas permeability and electrical conductivity of the inventive carbon papers despite baking and calcination at low temperatures.

## Claims

1. A carbon paper for a fuel cell gas diffusion layer comprising 10 to 70% by weight of a mixture of 1) polypyrrole or a derivative thereof and 2) poly(3,4-ethylenedioxythio-phene):poly(styrenesulfonate) (PEDOT:PSS) or a derivative thereof, wherein the carbon paper is produced by baking and calcination at a temperature of 50 to 500 °C.

2. The carbon paper according to claim 1, wherein the carbon paper comprises 40 to 70% by weight of the mixture.

3. The carbon paper according to claim 1 or 2, wherein the carbon paper is produced by baking and calcination at a temperature of 300 to 500 °C.

4. A method for producing a carbon paper for a fuel cell gas diffusion layer, the method comprising:
1) mixing conducting polymers polypyrrole or a derivative thereof andpoly(3,4-ethylenedioxy-thiophene):poly(styrenesulfonate) (PEDOT:PSS) or a derivative thereof with water or an organic solvent;
2) applying the mixed solution to a carbon fiber web; and
3) baking and calcining the applied carbon fiber web at a temperature of 50 to 500 °C,
wherein the carbon paper comprises 10 to 70% by weight of the conducting polymer.

5. The method according to claim 4, wherein 10 to 50 parts by weight of the conducting polymer is mixed with 100 parts by weight of the water or organic solvent.

6. The method according to claim 4 or 5, wherein the organic solvent is selected from the group consisting of ethylene glycol, glycerol, methanol, ethanol, isopropyl alcohol, butanol, propanol, and mixtures thereof.

7. The method according to any of claims 4-6, wherein the carbon paper comprises 40 to 70% by weight of the mixture.

8. The method according to any of claims 4-7, wherein, in step 3), the applied carbon fiber web is baked and calcined at 300 to 500 °C.

9. The method according to any of claims 4-8, wherein the baking and calcination time is from 1 to 12 hours.

10. A fuel cell comprising the carbon paper according to any of claims 1-3.

## Patentansprüche

1. Kohlepapier für eine Brennstoffzellen-Gasdiffusionsschicht, umfassend 10 bis 70 Gewichts-% eines Gemisches von 1) Polypyrrol oder einem Derivat davon und 2) Poly(3,4-ethylendioxythiophen):Poly(styrolsulfonat) (PEDOT:PSS) oder einem Derivat davon, wobei das Kohlepapier durch Backen und Kalzinieren bei einer Temperatur von 50 bis 500 °C hergestellt ist.

2. Kohlepapier nach Anspruch 1, wobei das Kohlepapier 40 bis 70 Gewichts-% des Gemisches umfasst.

3. Kohlepapier nach Anspruch 1 oder 2, wobei das Kohlepapier durch Backen und Kalzinieren bei einer Temperatur von 300 bis 500 °C hergestellt ist.

4. Verfahren zur Herstellung eines Kohlepapiers für eine Brennstoffzellen-Gasdiffusionsschicht, wobei das Verfahren umfasst:
1) Mischen von leitenden Polymeren Polypyrrol oder einem Derivat davon und Poly(3,4-ethylendioxythiophen):Poly(styrolsulfonat) (PEDOT:PSS) oder einem Derivat davon, mit Wasser oder einem organischen Lösungsmittel;
2) Aufstreichen der gemischten Lösung auf eine Kohlefaserbahn; und
3) Backen und Kalzinieren der bestrichenen Kohlefaserbahn bei einer Temperatur von 50 bis 500 °C,
wobei das Kohlepapier 10 bis 70 Gewichts-% des leitenden Polymers umfasst.

5. Verfahren nach Anspruch 4, wobei 10 bis 50 Gewichtsteile des leitenden Polymers mit 100 Gewichtsteilen des Wassers oder des organischen Lösungsmittels gemischt werden.

6. Verfahren nach Anspruch 4 oder 5, wobei das organische Lösungsmittel ausgewählt wird aus der Gruppe bestehend aus Ehylenglycol, Glycerol, Methanol, Ethanol, Isopropylalkohol, Butanol, Propanol und Mischungen davon.

7. Verfahren nach einem der Ansprüche 4 bis 6, wobei das Kohlepapier 40 bis 70 Gewichts-% des Gemisches umfasst.

8. Verfahren nach einem der Ansprüche 4 bis 7, wobei in Schritt 3) die bestrichene Kohlefaserbahn bei 300 bis 500 °C gebacken und kalziniert wird.

9. Verfahren nach einem der Ansprüche 4 bis 8, wobei die Back- und Kalzinierzeit 1 bis 12 Stunden beträgt.

10. Brennstoffzelle, umfassend das Kohlepapier nach einem der Ansprüche 1 bis 3.

## Revendications

1. Papier carbone pour une couche de diffusion de gaz pour une pile à combustible comprenant de 10 à 70 % en poids d'un mélange de 1) polypyrrole ou un dérivé de celui-ci et 2) poly(3,4-éthylènedioxythiophène):poly(styrènesulfonate) (PEDOT:PSS) ou un dérivé de celui-ci, dans lequel le papier carbone est produit par cuisson et calcination à une température de 50 à 500 °C.

2. Papier carbone selon la revendication 1, dans lequel le papier carbone comprend de 40 à 70 % en poids du mélange.

3. Papier carbone selon la revendication 1 ou 2, dans lequel le papier carbone est produit par cuisson et calcination à une température de 300 à 500 °C.

4. Procédé de production d'un papier carbone pour une couche de diffusion de gaz pour une pile à combustible, le procédé comprenant :
1) le mélange des polymères conducteurs polypyrrole ou un dérivé de celui-ci et poly(3,4-éthylènedioxythiophène):poly(styrènesulfonate) (PEDOT:PSS) ou un dérivé de celui-ci avec de l'eau ou un solvant organique ;
2) l'application de la solution mélangée sur un réseau de fibres de carbone ; et
3) la cuisson et la calcination du réseau de fibres de carbone appliqué à une température de 50 à 500 °C,
dans lequel le papier carbone comprend de 10 à 70 % en poids de polymère conducteur.

5. Procédé selon la revendication 4, dans lequel de 10 à 50 parties en poids de polymère conducteur sont mélangées avec 100 parties en poids de l'eau ou d'un solvant organique.

6. Procédé selon la revendication 4 ou 5, dans lequel le solvant organique est choisi dans le groupe constitué par l'éthylène glycol, le glycérol, le méthanol, l'éthanol, l'isopropanol, le butanol, le propanol et des mélanges de ceux-ci.

7. Procédé selon l'une quelconque des revendications 4 à 6, dans lequel le papier carbone comprend de 40 à 70 % en poids du mélange.

8. Procédé selon l'une quelconque des revendications 4 à 7, dans lequel lors de l'étape 3), le réseau de fibres de carbone appliqué est cuit et calciné entre 300 et 500 °C.

9. Procédé selon l'une quelconque des revendications 4 à 8, dans lequel le temps de cuisson et de calcination est de 1 à 12 heures.

10. Pile à combustible comprenant le papier carbone selon l'une quelconque des revendications 1 à 3.
